# EUROPEAN PATENT APPLICATION

(11) **EP 0 829 392 A1**
(43) Date of publication of application: **18.03.1998**
(21) Application number: 97901633.4
(22) Date of filing: 04.02.1997
(51) Int. Cl.: B60R 1/02

(54) **MIRROR FOR VEHICLES INTENDED TO OBSERVE OBSTACLES AT THE BACK OF THE VEHICLE**

(30) Priority: 19.02.1996 ES 9600397 U
(71) Applicant: Reina Gonzales-Novelles, Francisco Javier, 11500 El Puerto de Santa Maria (ES)
(72) Inventor: Reina Gonzales-Novelles, Francisco Javier, 11500 El Puerto de Santa Maria (ES)
(74) Representative: Riera Blanco, Juan Carlos
(86) International application number: ES9700022
(87) International publication number: WO9729928

(57) **Abstract**

The invention relates to a mirror for vehicles, which is intended to observe back obstacles, in the technical automotive field. The mirror is comprised of two main parts: an anchoring part (1) for attachment to the vehicle by means of a nut-screw assembly (3) and openings for the passage of a wiring (4) and hinge (5) for cyclic motion upwards, downwards, to the right and to the left; a housing part (2) which houses mechanisms for attachment and manual or mechanical orientation of a convexo-panoramic mirror (6). Both main parts are coupled by means of flanges and bayonet. It can be normally installed in the upper angle of the rear window of the vehicle, on the side opposite to the driver, in vehicles with left hand drive or right hand drive (according to the direction of driving). To this effect, the symmetry of the design is taken into account.

## Description

### Aim of the invention

This invention, as stated in the title of this descriptive report concerns a mirror for vehicles for observation of rear obstacles. Such device has been designed for providing additional advantages when compared to other existing devices with similar finalities.

The device has been designed for a convex and panoramic mirror to adequately fit, housed with an aerodynamic PVC rigid shell with the additional possibility for mechanical or manual handling.

### Background of the invention:

Several rear-mirror devices for driver monitoring are reported, by means of inflection of images, of the way behind.

We can for instance mention the rear-mirrors set in the front part of vehicles, always ahead the driver. Such mirrors are based on a PVC aerodynamic shell containing a series of mechanisms allowing a flat mirror to stay within and the possibility of orientation in different arches enough for the reflection of images conveying information to the driver of a vehicle. Such kind of mirrors undergo an incidence of rays on its flat plan with a 90 ? angle and are also reflected with such same angle.

Such system may allow the driver to get information via images of the way behind but fails to show the obstacles in the area immediately behind the vehicle.

A device also exists, installed in some public buses, by its entrance or exit doors, allowing the driver to monitor the input or output of passengers.
Such system also sustains a flat mirror and fails to show the driver the obstacles behind.

### Description of the invention:

The device of the invention shows a new structure allowing the panoramic-convex mirror to sustain efficiently, inside as well as outside the cabin of the vehicle and at the side opposite from the driver; should the steering wheel be on the left-hand side, the mirror will be placed on the upper right-hand frame (sitting facing the engine); should the steering wheel be on the right-hand side, the mirror will be place on the upper left frame (sitting facing the engine).

Those set inside the cabin have a shouldered cover whose external layer should normally be made of the same fabric and colour of the inner parts of the vehicle, for improved safety and look. Those set outside do not need such shouldered cover.

In order to obtain such aims, the device is based upon the usual rigid aerodynamic PVC shell containing mechanisms allowing not only the fastening but also the orientation (be it manual or mechanical) of the mirror.

The difference between such system and the others is that the inner mechanisms of the carcass can fast and orient a convex mirror rather than a flat one.

Such convex mirror allows the visual field to be increased when compared to a flat mirror and its location allows the monitoring so far restricted to drivers; the immediate rear of the vehicles.

Also, depending on the location given (be it on the upper right-hand or left hand angle of the frame of the rear window, or whether inside or outside the vehicle, a different fastening system has been provided depending on the orientation and always leaving the way for wiring and articulations.

Such mirror allows the driver to see the separation between the rear part of the vehicle and a likely obstacle. Its main use is easing the parking maneuver, avoiding small vehicle bumps which often originated unwanted repairs.

Suitable for automobile industry.

To complete the description hereinafter stated and in order to ease to understand better the terms of the invention, the descriptive memory comes with a set of plans whose drawings will help to understand easier the innovations of the device object of the invention.

### Brief description of the drawings

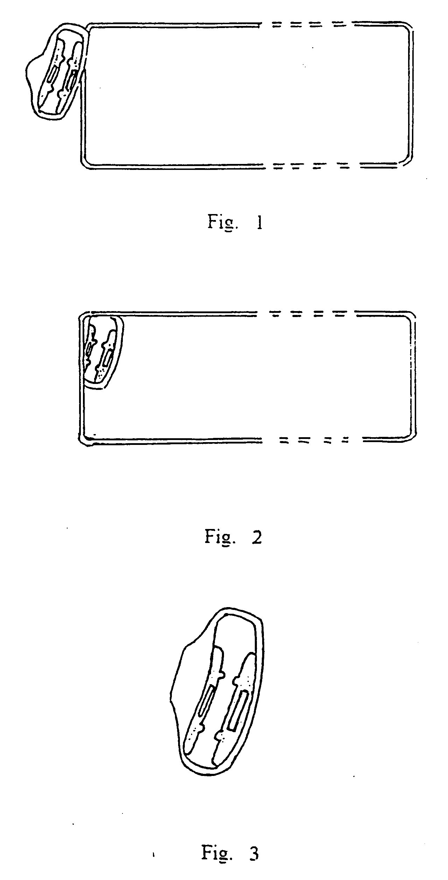

Figure 1.- Shows a view of the installation of the mirror object of the invention inside the cabin, from the normal position for a driver whose steering while is located on the left-hand side.

Figure 2.- Shows a view of installation of the mirror object of the invention outside the cabin, seen from the normal position for a driver of a vehicle whose steering-wheel is placed on the left-hand side.

Figure 3.- Shows an enlarged view of the reflection of images at the convex mirror.

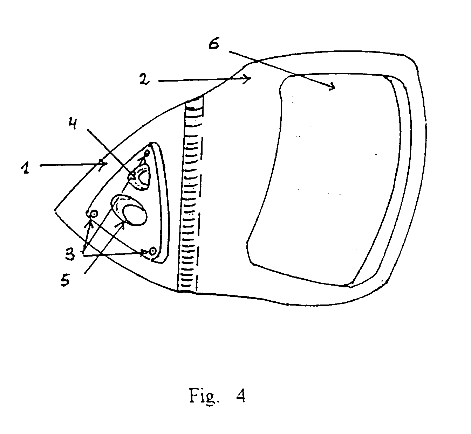

Figure 4.- Shows a view of the device configure by different pieces matched and holding a panoramic-convex mirror.

### Description of an execution preferred form

After considering the figures mentioned, it can be appreciated that the device is integrated by: two main parts, one anchoring the system to the vehicle (1) and the part containing the mechanisms and the actual convex-panoramic mirror (2). Such two pieces can be matched with each other.

The anchoring part, equipped with the usual fastening system to the automobile bodywork by means of screw-nut (3) and is equipped with openings (4) for allowing a trouble-free passage of the wiring and the articulation of a mirror cyclical movement (5), in the four main directions: up, down, left and right. It is made in a rigid PVC material.

The parts holding the mechanisms and the panoramic-convex mirror, PVC aerodynamic rigid carcass, contains the mechanisms and the mirror (6) holding a mobile orientable frame mainly towards up, down, left and right, though it can be orientated in whichever other intermediate directions due to its cyclic movement feature.

## Claims

1. Mirror for vehicles for observation of rear vehicles; notwithstanding the fact that it is of the kind of rear-mirrors, it is defined by the fact that it is integrated by a panoramic-convex mirror sustained by a mobile frame in the different directions by means of a cyclic articulation system, either manually or by means of an electric motor, inside an aerodynamic PVC rigid carcass.

2. Vehicle mirror for the observation of rear vehicles, in accordance with reivindication 1, defined by it being equipped with a system anchoring the device to the bodywork of the vehicle, leaving way for wiring and cyclic movement articulated system. Such anchoring mechanism matches by means of edges and bayonet fitting with the carcass containing the mirror.

3. Mirror for vehicles for the observation of rear vehicles, in accordance with claims 1 and 2, defined by the fact it is usually set on the upper angle of the frame of the rear window of the vehicle, on the side opposite to the driver. Should the steering wheel be on the left-hand side, the mirror will be placed on the upper right-hand frame (sitting facing the engine); should the steering wheel be on the right-hand side, the mirror will be place on the upper left frame (sitting facing the engine). The main technical features for obtaining the two alternatives are a symmetric design.

4. Mirror for observation of rear obstacles

## Amended claims

### Amended claims under Art. 19.1 PCT

1. Rear mirror for vehicles for observation of rear obstacles, external to the cabin, defined by the fact of being panoramic-convex and it being installed on the upper frame of the rear window of the vehicle, on the angle opposite to the driver. Should the steering wheel be on the left-hand side, the mirror will be placed on the upper right-hand frame (sitting facing the engine); should the steering wheel be on the right-hand side, the mirror will be place on the upper left frame (sitting facing the engine). Some drivers may choose to have it placed on both upper angles. The main technical features for obtaining both alternatives are design symmetry.
2. Rear mirror for vehicles for observation of rear obstacles external to the cabin, in accordance with reivindication 1, defined by having a system anchoring to the external face of the real metal or glass sheet at the rear of the vehicle, leaving way for wiring and cyclic movement articulated system. The surface of such anchoring system may vary in surface in accordance with the contact surface of the automobile bodywork, depending on the vehicle model and, thus, on its curves.
3. Rear mirror for vehicles for observation of rear obstacles external to the cabin, in accordance with claims 1 and 2, defined by the fact of being equipped with a rigid aerodynamic carcass matching with the anchoring in the above reivindication by means of edges and bayonet fitting. Such carcass houses a panoramic-convex mirror sustained by a frame which can hold the mirror in fix or mobile positions in the different directions by means of a cyclic articulation system, either by manual control or remotely operated.
4. Rear mirror for vehicles for observation of rear obstacles external to the cabin, in accordance with claims 1, 2 and 3, defined for the technical features to be provided by the panoramic-convex mirror contained in the rigid carcass in curvature and size and no deformation of the image and a sufficient visual field must be directly related with the height and length of the vehicle, accordingly.
In case of tall vehicles, such as small buses, industrial load or delivery vehicles, etc., the visual field is of several meters. In smaller vehicles, i. e., single volume, private cars, or 4WD compacts, the visual field is not that large but still sufficient.

Statement under Art. 19.1 PCT
The statement is made by the applicant in order to provide more explanations on the modifications of the claims, with more focus on such effects described in the description and the drawings.
 The previous number of claims is still in force; that is, four. The generic previous reivindication (number four) which said "Mirror for vehicles for observation of rear vehicles" is declared void.
 Though the previous claims are kept, the new page changes its order and provides a more detailed information.
 A greater focus is placed on the technical explanation, the following remarks are made: the mirror shown is placed on the rear part of the vehicles, in the external part of the cabin; such mirror is convex-panoramic and not flat nor concave; such mirror can be placed either anchored on the bodywork or the rear glass of the vehicle (depending on the model of installation); that the aim is providing the driver with a sufficient visual field for observation of rear vehicles placed immediately behind his own vehicle, so far inaccessible; that, obviously, its size and curvature are in intimate relation with the size of the vehicle (length and height); that its use is more adequate in such vehicles with no rear luggage racks such as single-volumes, compact or 4WD vehicles, minibuses, small industrial vehicles for pick - up, delivery, etc.

In relation with the quotes of precise claims contained in the international search report, the applicant deems such mirrors to be in accordance with other assignments and technical specifications beside those already mentioned: mirrors placed on the driver's door with real capacity of enlargement of the visual field of the way behind; mirrors placed above the driver, within the cabin, and before him, also for monitoring the way behind; mirrors placed on the luggage rack, in the large vehicles for monitoring side obstacles, concave mirrors inside the cabin, etc.
